**Europäisches Patentamt**

**European Patent Office**

**Office européen des brevets**

(19)

(11) Numéro de publication : **0 315 668 B1**

(12) **FASCICULE DE BREVET EUROPEEN**

(45) Date de publication du fascicule du brevet : **31.07.91 Bulletin 91/31**

(51) Int. Cl.⁵ : **A01B 45/02, A01B 33/02**

(21) Numéro de dépôt : **88904977.1**

(22) Date de dépôt : **24.05.88**

(86) Numéro de dépôt international : **PCT/FR88/00265**

(87) Numéro de publication internationale : **WO 88/09113 01.12.88 Gazette 88/26**

(54) SCARIFICATEUR-EMOUSSEUR ADAPTABLE A UN PETIT MOTOCULTEUR.

(30) Priorité : **25.05.87 FR 8707647**

(43) Date de publication de la demande : **17.05.89 Bulletin 89/20**

(45) Mention de la délivrance du brevet : **31.07.91 Bulletin 91/31**

(84) Etats contractants désignés : **AT BE CH DE FR GB IT LI LU NL SE**

(56) Documents cités :
**FR-A- 690 298**
**FR-A- 1 376 521**
**US-A- 2 794 308**
**US-A- 3 127 940**
**US-A- 4 483 400**

(73) Titulaire : **FORGES DES MARGERIDES S.A.**
**Hauterive**
**F-03270 S.-Yorre (FR)**

(72) Inventeur : **MOISE, René, Franck**
**23, rue de la Paix**
**F-03200 Vichy (FR)**

(74) Mandataire : **Chanet, Jacques**
**Conseil en Brevets 129 Avenue de Royat B.P. 27**
**F-63400 Chamalières (FR)**

## Description

La présente invention est du domaine de la motoculture de plaisance et elle a pour objet un dispositif scarificateur, émousseur, et aérateur de pelouses et gazons tel que connu par le document US-A-4483400 et comportant les caractéristiques du préambule de la revendication 1.

On connaît divers petits engins destinés principalement au travail des pelouses comportant des outils en forme de lames rotatives dans un plan vertical et disposés le long d'un arbre motorisé. Un premier type d'engins comprend un châssis en forme de caisse ouverte à sa face inférieure et supportant un moteur à sa face supérieure formant capot ; à l'intérieur de la caisse est disposé un ou plusieurs arbres supportant les lames ; cet arbre est supporté lui même par des paliers de la caisse et entraîné par le moteur au moyen d'une transmission à chaîne par exemple ; la caisse est pourvue de roues ou roulettes latérales. Dans un tel engin, la profondeur d'entaille est réglable soit en réglant la hauteur de l'arbre par rapport aux roues, soit la hauteur des roues par rapport à la caisse. Les engins de ce type sont pratiques mais ils ont l'inconvénient d'être spécialisés dans le travail qu'ils effectuent.

On connaît aussi des petits engins du genre houes motorisées dans lesquels des demi-arbres moteurs font saillie latéralement d'un carter moteur et sont aptes à recevoir soit des roues s'il s'agit d'utiliser l'engin comme moyen de traction, soit des outils rotatifs. On a ainsi proposer afin d'utiliser l'engin comme scarificateur des équipements consistant en une paire d'arbres manchonables sur les demi-arbres moteurs à une première extrémité et comportant à leur autre extrémité un moyeu de roue et une roue pouvant tourner librement autour du moyeu ; chaque arbre comporte une pluralité de lames scarificatrices; la première extrémité manchonnée est rendue solidaire du demi-arbre moteur au moyen d'une goupille; la rotation du moteur entraîne la rotation des lames tandis que la rotation des roues c'est-à-dire l'avance de l'engin est sous la seule dépendance de son conducteur. L'avantage d'un tel engin réside dans sa polyvalence mais un inconvénient est lié au fait que la profondeur d'entaille du sol est liée au diamètre des roues donc qu'elle n'est pas réglable pour un équipement donné.

On pourra se référer pour connaître un art antérieur plus précis aux publications US-A-4.483.400 (ARNDT), US-A-3.127.940 (HUTCHINSON), US-A-2.794.308 (CAVANAUG), FR-A-1.376.521 (BRIBAN) et FR-A-690.298 (KOROUM).

Le but de la présente invention est de proposer un dispositif pour l'équipement des petits moteur de motoculture du second type précité, qui soit amovible pour conférer au moteur sa polyvalence, et qui permette le réglage de la profondeur d'entaille.

Ce problème est résolu par les caractéristiques de la partie caractérisante de la revendication 1.

Selon la présente invention, dans un dispositif de culture, dit "scarificateur", destiné à entailler le sol au moyen d'outils en forme de lames rotatives dans un plan vertical autour de l'axe commun d'une paire d'arbre-porte-outils supportés chacun à une première de leurs extrémités par un demi-arbre moteur d'un petit engin moteur, du genre "houe motorisée", chaque dit arbre porte-outil est relié en libre rotation, à un palier supporté par un longeron comportant des roues, ou roulettes, à chacune de ses extrémités.

Le dispositif incorpore des moyens de réglage de la hauteur dudit palier au-dessus du longeron, de façon à régler finalement la profondeur des entailles dans le sol, et il est remarquable que malgré cette possibilité de réglage de la profondeur des entailles les longerons n'aient de relation entre eux que par l'intermédiaire des arbres porte-outils.

Suivant une forme préférée de réalisation du dispositif de l'invention, la relation entre le palier et le longeron est assurée par un couple de coulisseaux solidaires du palier et comportant des évidements d'axes sensiblement verticaux, et par un couple de piliers solidaires des longerons et conformés pour coulisser dans lesdits coulisseaux ; dans ce cas de réalisation, au moins un des coulisseaux et le pilier correspondant comportent des moyens pour fixer leur position relative, c'est-à-dire lesdits moyens de réglage de la hauteur du palier au-dessus du longeron.

Suivant une forme particulièrement simple de réalisation des moyens de réglage, ceux-ci sont constitués par un couple de trous de passage de goupille percé le long du coulisseau, et par une pluralité de trous analogues percés dans le pilier, la distance h1 séparant les trous du coulisseau étant égale à trois fois la moitié de la distance h2 séparant les trous du pilier (h1 = 3.h2/2).

Suivant une particularité de construction avantageuse la relation de libre rotation entre chaque arbre porte-outil et le palier correspondant est réalisée par un second demi-arbre engagé dans le palier, la relation entre ledit second demi-arbre et le palier étant fixe dans le sens de l'axe grâce à une rondelle d'extrémité et à un manchon prenant appui sur le demi-arbre, et étant rotative grâce à une bague antifriction comprise entre le demi-arbre et le palier.

Suivant une autre disposition constructive le longeron présente un premier décrochement dans le plan horizontal, pour sa moitié antérieure, grâce à quoi la roue antérieure peut être disposée à côté du longeron et un second décrochement dans le plan vertical, pour sa moitié postérieure, grâce à quoi la roue postérieure peut être logée au-dessus du longeron ; avantageusement, la relation entre la roue postérieure et le longeron est assurée par une fourche montée tourillonnante autour d'un axe verticale, sur le longeron.

La présente invention sera mieux comprise et des détails en relevant apparaîtront à la description qui va être faite et des détails en relevant apparaîtront en relation avec les figures des planches annexées, dans lesquelles :

— les fig. 1, 1a illustrent schématiquement un premier type de dispositif de l'art antérieur,

— les fig. 2, 2a illustrent de façon analogue un dispositif d'un second type de l'art antérieur, tandis que

— les fig. 3, 3a illustrent de façon comparable le dispositif de l'invention dans son principe,

— la fig. 4 est une vue partielle en perspective éclatée d'une forme de réalisation de ce dernier,

— la fig. 5 est une élévation partielle du même à plus grande échelle,

— la fig. 6 est une vue en plan correspondant à la fig. 5,

— la fig. 7 illustre en coupe partielle suivant A de la fig. 5 des détails de construction du dispositif de l'invention, et

— les fig. 8 à 11 illustrent un second mode de réalisation de la suspension du dispositif de l'invention.

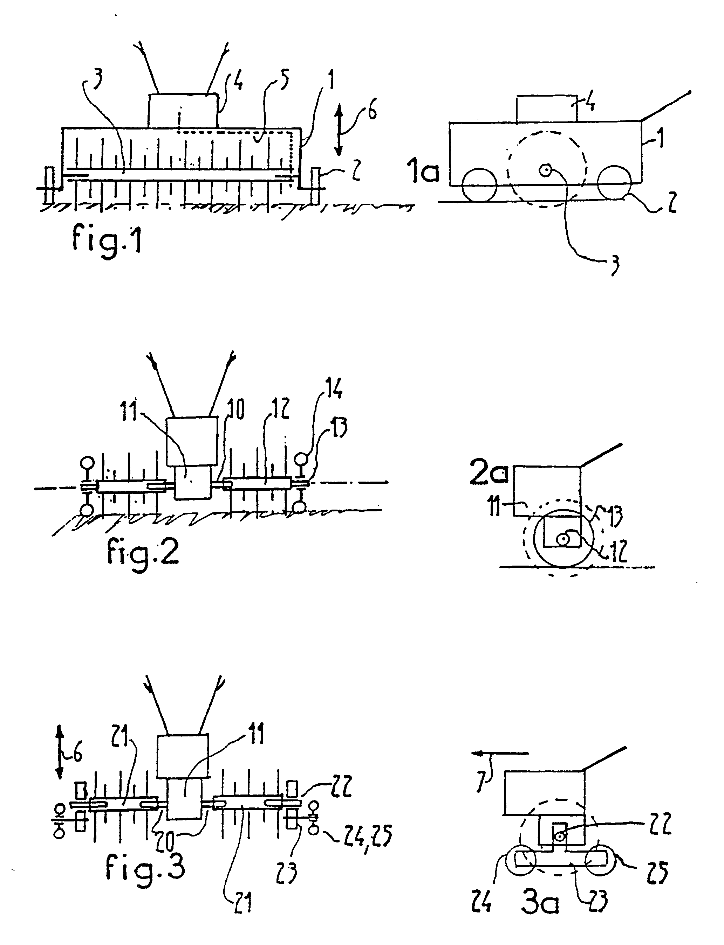

Sur les fig. 1, 1a, un scarificateur de l'art antérieur, de type spécialisé, comprend un châssis-caisse 1 pourvu de roues latérales 2, contenant intérieurement un arbre porte-lames scarificatrices, entraîné par un ensemble moteur 4 ; des moyens de transmission 5 commande la rotation de l'arbre à partir du moteur ; un tel dispositif comporte des moyens de réglage de la hauteur de l'arbre 3 au-dessus du sol ; on remarquera que les roues 2 sont indépendantes de l'arbre 3.

Sur l'ensemble des figures, les flèches 6 indiquent une faculté de réglage en hauteur, et les flèches 7 le sens de l'avance.

Sur les fig. 2, 2a, dans un autre dispositif de l'art antérieur, des demi-arbres tels que 10 font saillie d'un carter moteur 11 et sont solidaires de demi-arbres porte-lames, tels que 12 ; l'extrémité de chaque demi arbre est conformé en moyeu 13 sur lequel est monté une roue 14 pouvant tourner librement autour du moyeu ; dans ce cas de figure, les roues sont à l'inverse du cas précédent reliées aux arbres porte-lames même si elles sont libres en rotation par rapport à ceux-ci, lesquels sont eux-mêmes solidaires des arbres moteurs ; il est compréhensible que, dans ce cas, la profondeur des entailles faites dans le sol par les lames, soit fixée par la différence entre le diamètre des roues et celui de l'extrémité des lames. On notera que l'engin de la fig. 2 n'est pas spécialisé dans la scarification en ce sens qu'on peut remplacer les arbres 12 par des roues tractrices par exemple par des lames de houes ou par d'autres instruments tournants.

On rappelle que l'invention propose un équipement adaptable à un ensemble moteur, comme l'est l'équipement des fig. 2, 2a, mais qui ait en outre l'avantage d'une possibilité de réglage en hauteur qu'a le dispositif de la fig. 1.

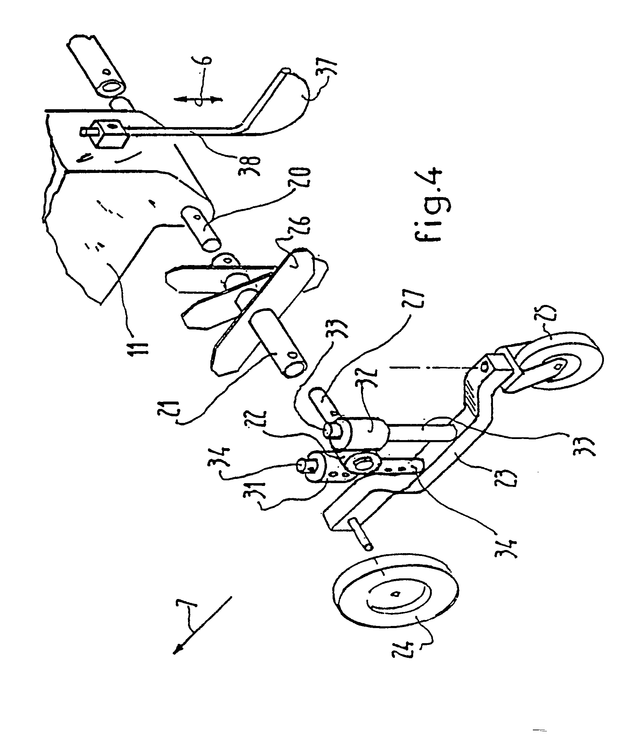

Sur les fig. 3, 3a et 4, un équipement de scarification formant le dispositif de l'invention comprend essentiellement une paire d'arbres porte-outils 21 manchonnés à une première extrémité sur les demi-arbres moteurs 20 et, à leur deuxième extrémité, reliés chacun à un palier 22 supporté par un longeron 23 pourvu à ses extrémités antérieure et postérieure de roues respectivement 24, 25 ; on remarquera qu'un tel équipement est adaptable au même ensemble moteur 11 que l'équipement des fig. 2, 2a ; il apparaît aussi sur ces dernière figures que la profondeur des entailles ne dépend plus de la différence des diamètres des roues d'une part et des lames d'autre part, mais qu'elle est déterminée par la hauteur du palier au-dessus du longeron.

Sur la fig. 4 plus particulièrement il apparaît que la relation entre le palier 22 et le longeron 23 est assurée par un couple de coulisseaux 31, 32 solidaire du palier ; ces coulisseaux comportent des évidements d'axes verticaux à travers lesquels passent des piliers respectivement 33 et 34 solidaires à leur base du longeron 23.

L'arbre 21 comportant une pluralité de lames 26 est creux afin de pouvoir loger à une première de ses extrémités le demi-arbre moteur 20 et à sa seconde extrémité un second demi-arbre 27 solidaire du palier 12 dans la direction de son axe ; des trous de goupille disposés de façon correspondante permettent de rendre l'arbre 21 solidaire des demi-arbres 20 et 27. On doit comprendre que la fig. 4 ne représente que la moitié d'un équipement. On remarquera en outre sur cette figure la présence à l'arrière de l'ensemble moteur 11 d'un éperon de freinage 37 destiné à ralentir l'avance, par frottement sur le sol, cet éperon de forme sensiblement semi-circulaire est relié à l'ensemble moteur par une tige 38 de longueur réglable.

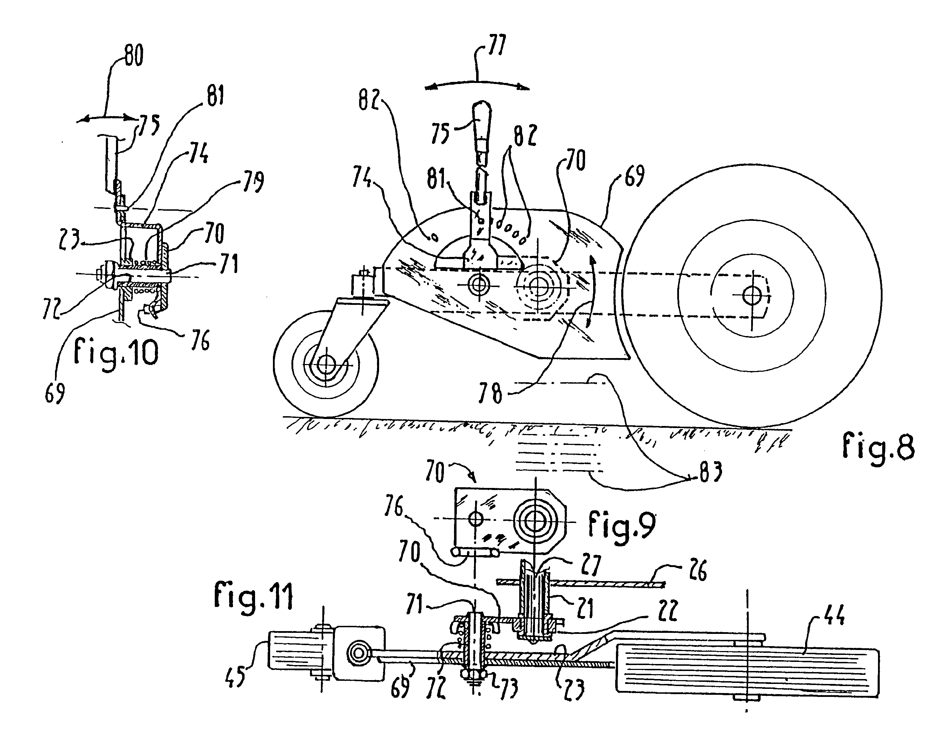

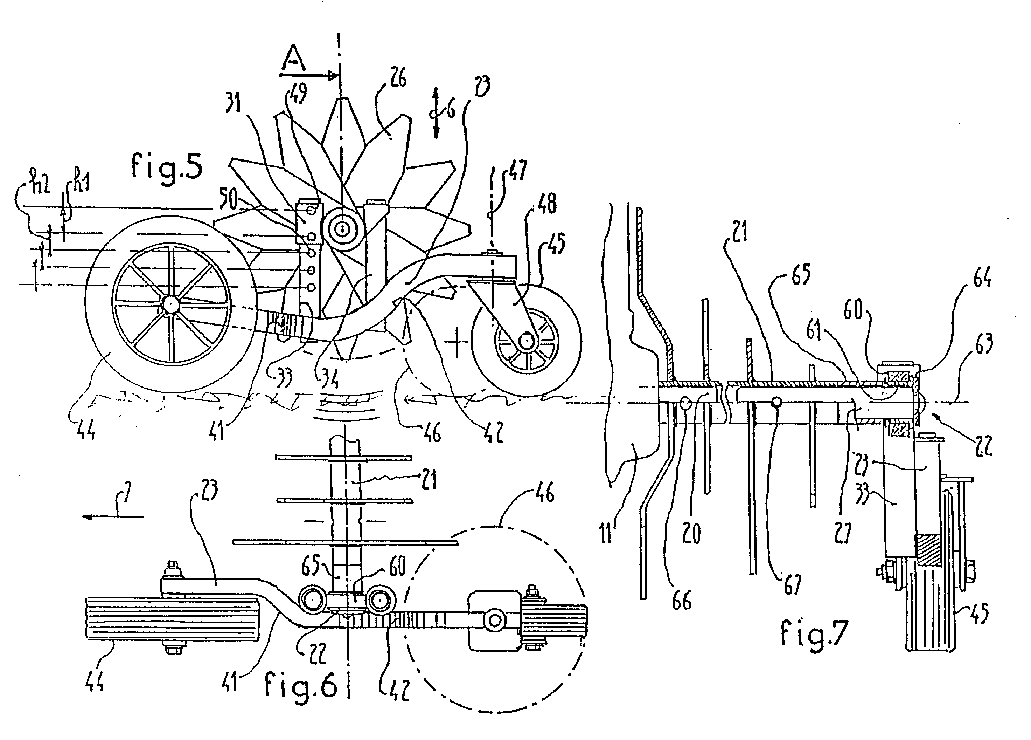

Sur les fig. 5 et 7 qui ne représentent qu'un demi-équipement et qui font abstraction de l'ensemble moteur, on remarque plus particulièrement la forme du longeron 23 qui présente deux décrochements, entendant par ce terme une abstraction suivant laquelle un élément rectiligne est recourbé dans un plan une première fois dans un sens et une seconde fois en sens inverse de telle sorte que les parties rectilignes de l'élément soient plus alignées tout en étant encore parallèles ; un premier décrochement 41 dans le plan horizontal permet le logement de la roue avant 44 de telle sorte que le plan médian de cette dernière se confonde avec le plan médian de l'autre partie du longeron (fig. 6), un second décrochement 42 dans le plan vertical permet le logement de la roue arrière 45 au-dessous du longeron et son débattement (trait mixte 46) au-dessous de ce dernier autour d'un axe vertical 47 ; la roue arrière 45 est prise dans une fourche 48 montée tourillonnante autour de l'axe 47. On remarquera particulièrement sur cette figure les moyens de réglage de la hauteur des lames 26 par rapport au sol : le coulisseau 31 comporte un couple de trous 49 séparés d'une distance h1 tandis que le pilier 33 comporte une pluralité de trous analogues tels que 50 séparés l'un de l'autre d'une distance h2, h1 étant égale à 3.h2/2.

Sur la fig. 7, il apparaît comment le demi-arbre 27 est engagé à son extrémité extérieure dans le palier 12 constitué d'une cage 60 annulaire par exemple et d'une bague antrifriction annulaire 61 en métal antrifriction ; on pourrait aussi au lieu de la bague antifriction proposer un palier à roulement qui ne serait cependant pas justifié par les faibles efforts ou vitesses considérés. Le demi-arbre 27 est calé dans le sens de l'axe 63 d'une part par une rondelle d'extrémité 64 d'un côté et par un manchon 65 prenant appui de l'autre côté sur l'arbre porte-lame 21 ; la structure tubulaire de l'arbre 21 lui permet d'être manchonné autour des demi-arbres 20 et 27 dont il est rendu solidaire tant en rotation qu'en translation par des goupilles non représentées sur les figures mais destinées à passer dans des trous respectivement 66, 67.

Tandis que le réglage en hauteur au-dessus du sol du dispositif des fig. 4 à 7 résultait d'une translation par coulissement du palier 22 par rapport au longeron 23, il va être décrit ci-dessous un mode de réglage de la hauteur par rotation.

Sur les fig. 8 à 11, un dispositif de l'invention selon un second mode de réalisation comprend comme le dispositif ci-dessus décrit, un couple de roues 44 et 45 montées sur un longeron 23 qui dans ce cas est rectiligne et solidaire d'un flasque 69 ; il comprend encore un couple d'arbres creux 21 pourvus de lames scarificatrices 26 et destinés à loger des demis-arbres 27 ; les arbres 21 sont comme précédemment montés rotatifs dans des paliers 22. Cependant, et à la différence du dispositif décrit plus haut, les paliers 22 ne sont plus solidaires de coulisses verticales, mais chacun d'eux est solidaire d'un bras horizontal 70 supportant un demi-arbre horizontal 71. De son côté, le longeron 23 supporte un manchon horizontal 72 destiné à loger le demi-arbre 71. Le demi-arbre 71 et le manchon 72 sont assemblés l'un dans l'autre par un écrou 73 qui interdit la translation de l'un par rapport à l'autre mais autorise leur rotation.

Un levier coudé 74 pourvu d'une manette 75, axé lui aussi autour du demi-arbre 71, est solidaire en rotation du bras 70 par le moyen d'une fourche 76. Grâce à cela, une rotation (flèche 77) de la poignée entraîne une rotation identique (flèche 78) du bras 70, et de ce fait, une variation de la hauteur par rapport au sol de l'arbre creux 21 des lames scarificatrices et de l'ensemble moteur non représenté sur ces dernières figures.

Le levier coudé 74 est pressé contre le bras 70 par un ressort 79 ; grâce à la fourche 76, et à un jeu suffisant autour du manchon 72, il peut pivoter transversalement (flèche 80) ; grâce à ce pivotement et à un ergot 81 pouvant encliqueter dans l'une des lumières 82 du flasque 69, les lames scarificatrices peuvent être fixées à certaines hauteurs 83 au-dessus du sol. Cette seconde forme de réalisation a l'avantage d'être d'un montage plus simple que le précédent.

Bien que l'on ait décrit et représenté des formes particulières de réalisation de l'invention, il doit être compris que la portée de cette dernière n'est pas limitée à ces formes mais qu'elle s'étend à tout dispositif agricole comportant les caractéristiques générales énoncées plus haut, tout en restant dans le cadre des revendications.

## Revendications

1. Dispositif de culture, dit "scarificateur", destiné à entailler le sol au moyen d'outils en forme de lames rotatives dans un plan vertical autour de l'axe commun d'une paire d'arbres-porte-outil (21) supportés chacun à une première de leurs extrémités par un demi-arbre moteur (20) d'un petit engin moteur, du genre "houe motorisée", caractérisé : en ce que chaque dit arbre porte-outil (21) est relié en libre rotation, à un palier (12) supporté par un longeron (23) comportant des roues (44, 45), ou roulettes, à chacune de ses extrémités ; et en ce qu'il incorpore des moyens de réglage de la hauteur dudit palier (12) au-dessus du longeron, de façon à régler finalement la profondeur des entailles dans le sol, lesdits longerons (23) n'ayant de relation entre eux que par l'intermédiaire desdits arbres porte-outil (21).

2. Dispositif selon la revendication 1, caractérisé: en ce que la relation entre le palier (12) et le longeron (23) est assurée par un couple de coulisseaux (31, 32) solidaires du palier et comportant des évidements d'axes sensiblement verticaux, et par un couple de piliers (33, 34) solidaires des longerons et conformés pour coulisser dans lesdits coulisseaux, et en ce qu'au moins un des coulisseaux et le pilier (33) correspondant comportent des moyens pour fixer leur position relative, c'est-à-dire lesdits moyens de réglage de la hauteur du palier au-dessus du longeron.

3. Dispositif selon la revendication 1, caractérisé: en ce que la relation de libre rotation entre chaque arbre porte-outil et le palier correspondant est réalisée par un second demi-arbre (27) engagé dans le palier, la relation entre ledit second demi-arbre et le palier étant fixe dans le sens de l'axe grâce à une rondelle d'extrémité (64) et à un manchon (65) prenant appui sur l'arbre porte-outils (21), et étant rotative grâce à une bague antifriction (61) disposée entre le demi-arbre (27) et une cage (60) de palier.

4. Dispositif selon la revendications 2, caractérisé : en ce que lesdits moyens de réglage sont constitués par un couple de trous (49) de passage de goupille percé le long du coulisseau (33), et par une pluralité de trous (50) analogues percés dans le pilier, la distance h1 séparant les trous (49) du coulisseau étant égale à trois fois la moitié de la distance h2 séparant les trous (50) du pilier (h1 = 3.h2/2).

5. Dispositif selon la revendication 1, caractérisé: en ce que le longeron présente un premier décrochement (41) dans le plan horizontal, pour sa moitié antérieure, grâce à quoi la roue antérieure (44) peut être disposée à côté du longeron et un second décrochement (42) dans le plan vertical, pour sa moitié postérieure, grâce à quoi la roue postérieure (46) peut être logée au-dessous du longeron, et en ce que la relation entre la roue postérieure et le longeron est assurée par une fourche (48) montée tourillonnante autour d'un axe vertical (47) à l'extrémité du longeron.

6. Dispositif selon la revendication 1, caractérisé: par un éperon de freinage (37) supporté par une tige (38) de longueur réglable à l'arrière de l'ensemble moteur 11.

7. Dispositif selon la revendication 1, caractérisé: en ce que la relation entre le palier (12) et le longeron (23) est assurée, pour chaque arbre (21), par un bras (70) supportant à une extrémité un demi-arbre (71) monté dans un manchon (72) solidaire du longeron (23) et relié a son autre extrémité au palier (12).

8. Dispositif selon la revendication 7, caractérisé: par un levier (74) pouvant faire entraîner en rotation le bras (70), ledit levier comportant un ergot (81) destiné à encliqueter dans l'une des lumières (82) d'un flasque (69) du longeron (23), d'où il résulte que la hauteur des lames (26) par rapport au sol peut être réglée par pivotement du levier (74).

**Patentansprüche**

1. Bodenlockerungsgerät, ein sogenannter "Grubber", der mit messerförmigen Werkzeugen, die sich in einer vertikalen Ebene um die gemeinsame Achse von zwei Werkzeugträgerwellen (21) drehen, die jeweils an einem Ende von einer Motorhalbwelle (20) eines kleinen Antriebsmotors des Typs "Motorhacke" getragen werden, in den Boden eindringt, gekennzeichnet dadurch, daß besagte Werkzeugträgerwelle (21) frei drehend mit einem Lager (12) verbunden ist, das auf einer Traverse (23) mit Rädern (44, 45) oder Rollen an beiden Enden gehalten wird ; und, daß Regelvorrichtungen von der Höhe des besagten Lagers (12) über der Traverse vorgesehen sind, mit welchen sich die Eindringtiefe in den Boden fest einstellen läßt, die besagten Traversen (23) untereinander nur durch die besagten Werkzeugträgerwellen (21) verbunden seid.

2. Vorrichtung gemäß Anspruch 1, gekennzeichnet dadurch, daß die Verbindung zwischen Lager (12) und Traverse (23) durch zwei fest mit dem Lager verbundene Gleitstücke (31, 32) hergestellt wird, welche im wesentlichen vertikale Achsenaussparungen haben und durch zwei mit den Traversen fest verbundene Säulen (33, 34), welche in besagten Gleitstücken gleiten können und dadurch, daß mindestens eines der Gleitstücke und die dazugehörige Säule (33) Vorrichtungen haben, mit welchen sich ihre relative Position fest einstellen läßt, das heißt, Regeleinrichtungen für die Einstellung der Lagerhöhe über der Traverse.

3. Vorrichtung gemäß Anspruch 1, gekennzeichnet dadurch, daß die freie Drehbarkeit zwischen jeder Werkzeugträgerwelle und dem entsprechenden Lager durch eine zweite Halbwelle (27) hergestellt wird, die in das Lager eingreift, wobei besagte Halbwelle und das Lager in Achsrichtung durch eine Abschlußscheibe (64) und eine Muffe (65), die auf der Werkzeugträgerwelle (21) ruht, fest verbunden sind und mit einem Weißmetallring (61) zwischen der Halbwelle (67) und einem Lagerkäfig (60) drehbar verbunden sind.

4. Vorrichtung gemäß Anspruch 2, gekennzeichnet dadurch, daß die besagten Regeleinrichtungen aus einer Gruppe von Bohrungen (49) zum Durchführen von Paßstiften entlang des Gleitstückes (33) und analogen Bohrungen (50) in der Säule bestehen, wobei der Abstand h1 zwischen den Bohrungen (49) des Gleitstückes gleich dreimal die Hälfte des Abstandes h2 zwischen den Bohrungen (50) der Säule ist (h1 = 3 × h2 : 2).

5. Vorrichtung gemäß Anspruch 1, gekennzeichnet dadurch, daß die Traverse in der Horizontalebene an der vorderen Hälfte eine erste Kröpfung (41) hat, durch welche das Vorderrad (44) neben der Traverse angeordnet werden kann und eine zweite Kröpfung (42) in der Vertikalebene an der hinteren Hälfte, wodurch das Hinterrad (46) unter der Traverse angeordnet werden kann und dadurch, daß das Hinterrad und die Traverse durch eine Gabel (48) miteinander verbunden sind, die drehend um eine Vertikalachse (47) am Ende des Hebels angeordnet ist.

6. Vorrichtung gemäß Anspruch 1, gekennzeichnet durch einen Bremssporn (37) an einem Stab (38) mit verstellbarer Länge hinter der Motorbaugruppe 11.

7. Vorrichtung gemäß Anspruch 1, gekennzeichnet dadurch, daß Lager (12) und Traverse (23) für jede Welle (21) mit einem Tragarm (70) verbunden sind, der an einem Ende eine Halbwelle (77) in einer fest mit der Traverse (23) verbundenen Muffe (72) trägt und der an seinem anderen Ende mit Lager (72) verbunden ist.

8. Vorrichtung gemäß Anspruch 7, gekennzeichnet durch einen Hebel (74), der Tragarm (70) drehend mitnehmen kann, wobei besagter Hebel einen Nocken (38) hat, der in eine der Aussparungen (82) eines Flansches (69) von Traverse (23) eingreift, woraus sich ergibt, daß die Höhe der Messer (26) über dem Boden durch das Schwenken von Hebel (74) eingestellt werden kann.

## Claims

1. A cultivation device of the so-called "scarifier" type, which is intended to cut into the ground with the aid of tools in the form of blades rotating in a vertical plane about the common axis of a pair of tool carrier shafts (21), each of which is supported at a first end by a drive half-shaft (20) of a small drive unit of the "motorized hoe" type, wherein each of said tool carrier shafts (21) is connected for free rotation to a bearing (12) supported by a longitudinal member (23) equipped with wheels (44, 45) or rollers at each end. and, wherein it incorporates means for the adjustment of the height of said bearing (12) above the longitudinal member, in such a manner as finally to regulate the depth of cut into the ground, said longitudinal members (23) being connected together only by means of said tool carrier shafts (21).

2. The device as claimed in claim 1, wherein the connection between the bearing (12) and the longitudinal member (23) is made by a pair of slides (31, 32) fastened to the bearing and provided with cavities whose axes are substantially vertical, and by a pair of pillars (33, 34) fastened to the longitudinal members and shaped to slide in said slides, and wherein at least one of the slides and the corresponding pillar (33) are provided with means for securing them in their relative positions, that is to say said means for the adjustment of the height of the bearing above the longitudinal member.

3. The device as claimed in claim 1, wherein the relationship of free rotation between each tool carrier shaft and the corresponding bearing is achieved by means of a second half-shaft (27) engaged in the bearing, the connection between said second half-shaft and the bearing being fixed in the direction of the axis with the aid of an end washer (64) and of a sleeve (65) bearing against the tool carrier shaft (21), and being rotational with the aid of an antifriction ring (61) disposed between the half-shaft (27) and a bearing cage (60).

4. The device as claimed in claim 2, wherein said adjustment means consist of a pair of holes (49) pierced along the slide (33) for the passage of a pin, and of a plurality of similar holes (50) pierced in the pillar, the distance h1 separating the holes (49) in the slide being equal to three times half the distance h2 separating the holes (50) in the pillar (h1 = 3.h2/2).

5. The device as claimed in claim 1, wherein the longitudinal member has a first steplike offset (41) in the horizontal plane, where its front half is concerned, as the result of which the front wheel (44) can be disposed at the side of the longitudinal member, and a second steplike offset (42) in the vertical plane, where its rear half is concerned, as the result of which the rear wheel (46) can be accommodated under the longitudinal member, and wherein the connection between the rear wheel and the longitudinal member is made by a fork (48) mounted for pivoting about a vertical axis (47) at the end of the longitudinal member.

6. The device as claimed in claim 1, wherein a brake spur (37) supported by a rod (38) of adjustable length at the rear of the drive unit (11).

7. The device as claimed in claim 1, wherein the connection between the bearing (12) and the longitudinal member (23) is made for each shaft (21) by an arm (70) supporting at one end a half-shaft (71) mounted in a sleeve (72) fastened to the longitudinal member (23) and connected at its other end to the bearing (12).

8. The device as claimed in claim 7, wherein a lever (74) adapted to turn the arm (70), said lever being provided with a pin (81) intended to snap into one of the apertures (82) in a side plate (69) of the longitudinal member (23), with the result that the height of the blades (26) relative to the ground can be adjusted by pivoting the lever (74).

fig.1

1a

fig.2

2a

fig.3

3a

fig.4

EP 0 315 668 B1

fig.10

fig.8

fig.9

fig.11

EP 0 315 668 B1

fig.5

A
49
26
23
↕6
31
47
48
45
50
h2 h1
44
41
33
34
46
42

fig.6
7
23
21
46
65
60
44
41
22
42

fig.7
21
65
61
60
64
63
11
20
66
67
27
23
33
22
45

EP 0 315 668 B1

10